# EUROPÄISCHE PATENTSCHRIFT

(11) **EP 1 302 292 B1**
(45) Veröffentlichungstag und Bekanntmachung des Hinweises auf die Patenterteilung: **25.08.2004**
(21) Anmeldenummer: 02022957.1
(22) Anmeldetag: 12.10.2002
(51) Int. Cl.: B29C 35/00, F16J 15/46

(54) **Verfahren zur Herstellung einer aufblasbaren vulkanisierten Dichtung**
Method of fabrication of an inflatable vulcanised seal
Méthode de fabrication d'une garniture d'étanchéité gonflable vulcanisée

(30) Priorität: 15.10.2001 DE 10150827
(43) Veröffentlichungstag der Anmeldung: 16.04.2003
(73) Patentinhaber: Gummi-Welz GmbH & Co. KG, 89077 Ulm (DE)
(72) Erfinder: Schiffers, Herbert, 89275 Elchingen (DE)
(74) Vertreter: König, Beate, Dipl.-Phys. Dr.

(56) Entgegenhaltungen:
- EP-A- 0 055 119
- DE-A- 2 304 171
- DE-A- 3 735 730
- DE-A- 19 645 904
- DE-C- 4 230 806
- GB-A- 2 273 960

## Beschreibung

Die Erfindung betrifft ein Verfahren zur Herstellung einer aufblasbaren vulkanisierten Dichtung, bei dem ein oder mehrere Dichtungs- und/oder Verschlußteile in eine Hohlkammer der Dichtung eingebracht oder eingesetzt werden und die Teile der Dichtung eine Vulkanisationsbehandlung erfahren.

Aufblasbare Dichtungen werden herkömmlich beispielsweise zum Schließen und Öffnen von Tür-, Tor- und Deckensystemen verwendet (siehe z.B. EP 0 466 531 A1). Die aufblasbaren Dichtungen werden üblicherweise, etwa beim Einsatz in Omnibussen, in ein Gegenprofil beispielsweise in einer Tür eingebettet, wobei mittels Anpreßdruck und Formgebung eine feste Verankerung der Tür über ihre gesamte Höhe erzielt wird und Fertigungstoleranzen zwischen Portal und Tür durch Überbrücken unterschiedlicher Spaltbreiten ausgeglichen werden.

Üblicherweise erfolgt die Herstellung aufblasbarer Dichtungen, indem ein Hohlkammerprofilstrang kontinuierlich extrudiert und vulkanisiert wird. Der so gebildete schlauchförmige Hohlkammerprofilstrang wird aufgewickelt und kann dann einfach gelagert und transportiert werden.

In einem nachfolgenden Herstellungsschritt wird der Hohlkammerprofilstrang abgelängt, d.h. auf das Fertigmaß der aufblasbaren Dichtung abgeschnitten. Die Enden des entstandenen Hohlkammerrohlings werden durch Stopfen verschlossen. Dies kann durch Einkleben der Stopfen geschehen oder die Stopfen werden in einem weiteren Vulkanisationsschritt anvulkanisiert. Alternativ werden die Stopfen auch mittels mechanischer Verriegelungssysteme, beispielsweise Schellen, Bänder, etc. angebracht, so daß sie dann fest eingebunden sind.

Vorteilhaft bei dieser zweistufigen Herstellungsweise ist, daß die Lagerung des schlauchförmigen Hohlkammerprofilrohlings sehr einfach ist und nach dem Ablängen dann eine Weiterverarbeitung in den benötigten Fertigungslängen erfolgen kann. Als sehr nachteilig hat sich herausgestellt, daß die aufblasbare Dichtung im Einsatz nur eine begrenzte Lebensdauer hat. Dies ist darauf zurückzuführen, daß das Hohlkammerprofilteil und der Stopfen keine homogene Verbindung bilden. Bei Gebrauch wird erfährt eine aufblasbare Dichtung eine Dehnung von bis zu 400 %, die der eingebrachte Stopfen nicht vollständig mit ausführt. Ist er eingeklebt worden, hält die Klebenaht im Verlauf der Zeit nicht mehr, und auch bei anvulkanisierten Stopfen ist die Festigkeit der Verbindung für die auf sie wirkenden Belastungen nicht ausreichend groß. Der Grund hierfür ist, daß im bereits vulkanisierten Hohlkammerprofilmaterial nur noch ein Teil der Radikale reaktionsfähig ist und für den weiteren Vulkanisationsschritt Verfügung steht. Im Fall einer mechanischen Anbringung der Stopfen kann es z.B. bei Schellenbändern durch die Bewegung der Dichtungswandung im Lauf der Zeit zu Verschiebungen kommen, so daß ebenfalls Undichtigkeiten auftreten können.

Aus der DE 42 30 806 C1 ist ein Dichtungsring bekannt, dessen zwei Stirnenden miteinander verbunden sind. In den Verbindungsbereich wird ein Träger mit einer Folie eingebracht, die dazu dient, die Vulkanisierfläche zu vergrößern und ein Unterwandern bei Druckaufbau im Inneren des Dichtungshohlprofils zu verhindern. Das Trägerelement kann aus vulkanisiertem Gummi bestehen und die Vulkanisationsmasse kann auch bereits vulkanisiert worden sein. Es wird die Lehre gegeben, diese Masse an das Dichtungshohlprofil anzuvulkanisieren oder anzukleben. Die Verbindung von vulkanisierten Materialien beispielsweise mit einer nicht vulkanisierten Folie und einem weiteren Material unter Temperatur- und Druckeinwirkung ist indessen eine herkömmliche Maßnahme, wobei für den Vulkanisationsvorgang wie erwähnt nur Radikale zu Verfügung stehen, die noch frei für eine Verbindung zwischen der nicht vulkanisierten Folie und dem vulkanisierten Material sind. Damit kann nur eine Teilfestigkeit bzw. teilräumliche Vernetzung erzielt werden, die geringer als bei einem voll ablaufenden Vulkanisiervorgang sind.

Der Erfindung liegt die Aufgabe zugrunde, ein Verfahren zur Herstellung einer zumindest ein eingebrachtes Formteil (Dichtungs-/Verschlußteil) aufweisenden, aufblasbaren vulkanisierten Dichtung zu schaffen, das eine lange Einsatzdauer der Dichtung ermöglicht.

Diese Aufgabe ist erfindungsgemäß bei einem Verfahren mit den Merkmalen des Anspruchs 1 gelöst. Weiter ist Gegenstand der Erfindung auch eine aufblasbare Dichtung mit den Merkmalen des Anspruchs 8, bei der die Dichtungshohlkammer und die Formteile zusammen vulkanisiert sind. Vorteilhafte Varianten des erfindungsgemäßen Verfahrens sind Gegenstand der Unteransprüche.

Gegenstand der Erfindung ist somit ein Verfahren zur Herstellung einer aufblasbaren vulkanisierten Dichtung, bei dem eine Dichtungshohlkammer vulkanisiert und bei dem ein oder mehrere Formteile in die Dichtungshohlkammer eingebracht werden. Dabei wird ein nicht vulkanisierter Hohlkammerrohling hergestellt und in den Hohlkammerrohling wird (werden) das (die) nicht vulkanisierte(n) Formteil(e), Dichtungs- und/oder Verschlußteile, eingebracht. Der so erhaltene Dichtungsrohling wird dann vulkanisiert.

Wesentlich bei dem erfindungsgemäßen Verfahren ist, daß die Dichtungshohlkammer, d.h. der Hohlkammerrohling, und das (die) bereits eingesetzte(n) Formteil(e) (Dichtungs- und/oder Verschlußteile), d.h. somit der komplette Dichtungsrohling, der bzw. dessen Teile noch keiner Vulkanisationsbehandlung unterzogen wurden, in einem Schritt vulkanisiert und verschlossen wird. So wird beispielsweise der gesamte Hohlkammerprofilstrang vulkanisiert und bei diesem Arbeitsgang gleichzeitig der Verschluß (Dichtungs-/Verschlußteil) an den Enden mit vulkanisiert, d.h. Vulkanisation der Dichtung und Verschließen des Dichtungsstrangs erfolgen in einem Arbeitsschritt. Die Verbindung von Dichtungshohlkammerteil und Formteil ist damit außerordentlich fest. Für den Vulkanisationsvorgang kann nämlich das gesamte Material genutzt werden, anders als bei dem oben erwähnten bekannten Verfahren, bei dem bereits eine Vorvulkanisation des Profilstrangs erfolgt ist und damit ein Teil des Elastomermaterials für den erneuten Vulkanisationsvorgang verbraucht ist, indem beispielsweise Radikale nicht mehr komplett zur Verfügung stehen. Vorzugsweise wird EPDM (Ethylen-Propylen-Dien-Kautschuk) als Elastomermaterial verwendet. Eine besonders feste Verbindung ergibt sich, wenn beide Teile, das Dichtungshohlkammerteil und das Formteil, aus demselben Material sind.

Das erfindungsgemäße Verfahren wird vorteilhaft zur Herstellung von aufblasbaren strangförmigen Dichtungsprofilen, insbesondere zum Einsatz in Türsystemen von Fahrzeugen des öffentlichen Personenverkehrs, z.B. Omnibussen, zum Verriegeln und Schließen eingesetzt. Dabei wird ein Hohlkammerprofilstrang extrudiert und die Enden des abgelängten Hohlkammerprofilstrangs werden mit Stopfen verschlossen. Im einzelnen, nach dem Extrudieren des Hohlkammerprofilstrangs wird der Hohlkammerprofilstrang abgelängt und an den Enden mit Stopfen als Formteilen verschlossen. Der so erhaltene Dichtungsprofilrohling wird anschließend vulkanisiert.

Vorzugsweise werden der Hohlkammerrohling und das Formteil vor der Vulkanisation in Formen verpreßt. Dadurch sind sie praktisch formschlüssig aneinander angepaßt und ohne Spiel bzw. Zwischenraum in Kontakt, bevor der eigentliche Fixierungs- bzw. Vulkanisationsvorgang abläuft.

Die Formteile werden besonders einfach in die Hohlkammer eingesetzt, wenn ihr Material weniger steif als das Hohlkämmermaterial ist. Hierzu wird eine geringere Shore-Härte für die Formteile als für die Hohlkammer vorgesehen.

Um zu verhindern, daß es zu Verklebungen kommt, wird der Hohlkammerrohling vor der Vulkanisation innen mit flüssigen Seifen beschichtet.

Bei einer bevorzugten Verfahrensvariante werden die Formteile und/oder der Hohlkammerrohling vor der Vulkanisation mit Cyclohexanon und/oder gummilöslichen Lösungsmitteln behandelt. Hierdurch kann die Vulkanisation aktiviert werden, so daß sie effektiver abläuft.

Die Erfindung wird im folgenden weiter anhand eines Ausführungsbeispiels und der zugehörigen Zeichnung erläutert, wobei diese Darstellung lediglich zu Veranschaulichungszwecken dient und die Erfindung nicht hierauf einschränken soll. In der Zeichnung zeigen:
- Fig. 1: eine perspektische Ansicht einer noch nicht verschlossenen aufblasbaren Dichtung und
- Fig. 2: schematisch eine Stirnansicht der Dichtung von Fig. 1 nach der Vulkanisation.

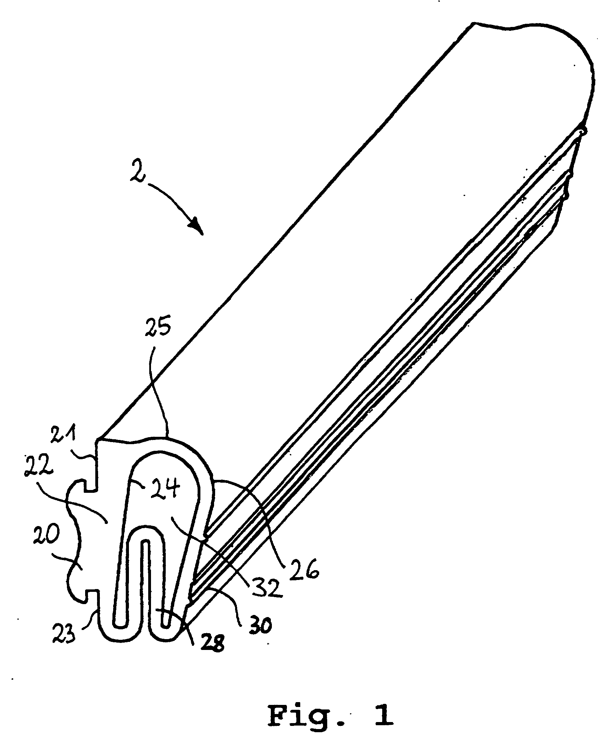

In Fig. 1 ist ein noch nicht vulkanisiertes Hohlkammerprofil 2 aus Elastomermaterial gezeigt, das zur Herstellung einer aufblasbaren Dichtung vorgesehen ist. Das Profil weist einen Montagewulst bzw. -steg 20 für die spätere Verankerung des Profils an beispielsweise einer Portalsäule einer Fahrzeugkarosserie auf, der sich auf der Rückseite eines Aussteifungsbereichs 22 des Profils erstreckt. In Querrichtung des Hohlkammerprofils weist das Profil auf einer Seite des Montagewulstes 20, in der Darstellung von Fig. 1 oberhalb von diesem, einen schulterartigen Anlagebereich 21 und auf der anderen Seite des Montagewulstes 22 einen Wandbereich 23 auf. Auf der zu dem Montagewulst 20 entgegengesetzten Seite weist der Aussteifungsbereich 22 eine schräg verlaufende Wand 24 auf, wobei die Materialdicke von dem dem Anlagebereich 21 gegenüberliegenden Bereich zum anderen Ende der Wand 24 gegenüberliegend dem Wandbereich 23, also in Fig. 1 von oben nach unten, hin abnimmt.

Vom Bereich der Wand 24 erstreckt sich von dieser aus eine flexible Dichtungswand 26 unter Bildung eines leicht gewölbten Bereichs 25 fort, die mit Abstand zur Wand 24 verläuft und auf der anderen Seite, somit gegenüber dem gewölbten Bereich 25, eine Faltung 28 aufweist. Auf der dem Montagewulst 20 gegenüberliegenden Seite weist die Dichtungswand 26 mehrere Fortsätze 30 auf. Durch die Wand 24 und die flexible Dichtungswand 26 ist eine Kammer 32 gebildet.

In Fig. 1 ist die Dichtung im nicht aufgeblasenen Zustand gezeigt. Wird die Dichtung bei Gebrauch aufgeblasen, so wird die durch die Dichtungswand 26 gebildete Kammer 32 aufgeweitet, wobei insbesondere der Bereich der Faltung 28 ausgedehnt wird. Dies führt dazu, daß einerseits ein festes Anliegen in dem Bereich der geringeren Spaltbreite zwischen Tür und Portal an einem Gegenprofil oder dergleichen erfolgt und andererseits die Dichtung auf der Faltenseite schneller und stärker aufgeblasen wird.

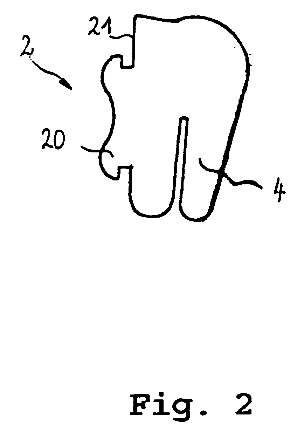

Fig. 2 veranschaulicht schematisch die Dichtung nach der Vulkanisation, d.h. mit stirnseitig eingesetztem Stopfen 4. Durch die gemeinsam erfolgte Vulkanisation kann die Dichtung große Dehnungsbewegungen über lange Zeiträume ausführen, ohne daß es zu einem Lösen oder Undichtigkeiten im Bereich des Stopfensitzes kommt.

## Patentansprüche

1. Verfahren zur Herstellung einer aufblasbaren vulkanisierten Dichtung, bei dem ein oder mehrere Dichtungs- und/oder Verschlußteile (4) in eine Hohlkammer der Dichtung eingebracht werden und die Teile der Dichtung eine Vulkanisationsbehandlung erfahren,
**dadurch gekennzeichnet, daß**
ein Hohlkammerrohling (2) hergestellt wird,
in den Hohlkammerrohling (2) das (oder die) Dichtungsund/oder Verschlußteil(e) (4) eingebracht wird (werden),
womit der Dichtungsrohling erhalten wird und wobei die Teile des Dichtungsrohlings noch keine Vulkanisationsbehandlung erfahren haben, und
erst der so erhaltene Dichtungsrohling vulkanisiert wird.

2. Verfahren zur Herstellung eines aufblasbaren strangförmigen vulkanisierten Dichtungsprofils nach Anspruch 1, bei dem ein Hohlkammerprofilstrang extrudiert und die Enden des abgelängten Hohlkammerprofilstrangs mit Stopfen (4) verschlossen werden,
**dadurch gekennzeichnet, daß**
ein Hohlkammerprofilstrang extrudiert wird,
der Hohlkammerprofilstrang abgelängt wird und mit Stopfen als Formteil(e) (4) verschlossen wird und
der so erhaltene Dichtungsprofilrohling vulkanisiert wird.

3. Verfahren nach Anspruch 1 oder 2, **dadurch gekennzeichnet, daß** der Hohlkammerrohling mit den eingebrachten Dichtungs- und/oder Verschlußteilen in Formen verpreßt und der Dichtungsrohling erst anschließend vulkanisiert wird.

4. Verfahren nach einem der Ansprüche 1 bis 3, **dadurch gekennzeichnet, daß** als Elastomermaterial EPDM (Ethylen-Propylen-Dien-Kautschuk) verwendet wird.

5. Verfahren nach einem der Ansprüche 1 bis 4, **dadurch gekennzeichnet, daß** für die Hohlkammer und die Dichtungs- und/oder Verschlußteile dasselbe Elastomermaterial verwendet wird.

6. Verfahren nach einem der Ansprüche 1 bis 5, **dadurch gekennzeichnet, daß** für die Dichtungs- und/oder Verschlußteile eine geringere Shore-Härte als für die Hohlkammer vorgesehen wird.

7. Verfahren nach einem der Ansprüche 1 bis 6, **dadurch gekennzeichnet, daß** der Hohlkammerrohling vor der Vulkanisation innen mit flüssigen Seifen beschichtet wird.

8. Verfahren nach einem der Ansprüche 1 bis 7, **dadurch gekennzeichnet, daß** die Dichtungs- und/oder Verschlußteile und/oder der Hohlkammerrohling vor der Vulkanisation mit Cyclohexanon und/ oder gummilöslichen Lösungsmitteln behandelt werden.

9. Aufblasbare Dichtung, umfassend eine Dichtungshohlkammer und in diese eingebrachte Dichtungs- und/oder Verschlußteile, insbesondere Verschlußstopfen (4), insbesondere hergestellt unter Verwendung eines Verfahrens nach einem der Ansprüche 1 bis 8, **dadurch gekennzeichnet, daß** die Dichtüngshohlkammer (2) und die Dichtungs- und/oder Verschlußteile (4) zusammen durchvulkanisiert sind.

## Claims

1. Method for the production of an inflatable vulcanised seal, incorporating one or more sealing and/or closure parts (4) located within a hollow chamber of the seal, whereby said parts of the seal are subjected to a vulcanisation treatment, **characterised in that** a hollow chamber precast (2) is manufactured, and **in that** the sealing and/or closure part(s) (4) is (are) inserted into the hollow chamber precast (2), whereby a seal precast is produced, and whereby the parts of the seal precast have not yet been subjected to a vulcanisation treatment, and **in that** only the seal precast produced in the above way is then vulcanised.

2. Method for the production of an inflatable strand-shaped vulcanised seal profile according to Claim 1, for which a hollow chamber profile strand is extruded and the ends of the hollow chamber profile strand that have been cut to size are closed off with a plug (4), **characterised in that** a hollow chamber profile strand is extruded, **in that** the same hollow profile chamber strand is cut to size and closed off with (a) plug(s) (4) taking the form of (a) profile part(s) (4), and **in that** the resulting seal profile precast is then vulcanised.

3. Method according to Claim 1 or 2, **characterised in that** the hollow chamber precast with the inserted sealing and/or closure parts is pressed into a profile, and **in that** the seal precast is vulcanised only once this has taken place.

4. Method according to one of the preceding Claims 1 to 3, **characterised in that** EPDM (ethylene propylene diene rubber) is used as the elastomeric material.

5. Method according to one of the preceding Claims 1 to 4, **characterised in that** the same elastomeric material is used for the hollow chamber and the sealing and/or closure parts.

6. Method according to one of the preceding Claims 1 to 5, **characterised in that** a lower shore hardness is utilised for the sealing and/or closure parts than is used for the hollow chamber.

7. Method according to one of the preceding Claims 1 to 6, **characterised in that** the hollow chamber precast is internally coated with liquid soaps prior to being vulcanised.

8. Method according to one of the preceding Claims 1 to 7, **characterised in that** the sealing and/or closure parts and/or the hollow chamber precast is treated with cyclohexanone and/or rubber-soluble solvents prior to being vulcanised.

9. Inflatable seal incorporating a hollow seal chamber, and sealing and/or closure parts inserted into the same, especially closure plugs (4), especially those manufactured whilst utilising a method according to one of the preceding Claims 1 to 8, **characterised in that** the hollow seal chamber (2) and the sealing and/or closure parts (4) are vulcanised together.

## Revendications

1. Procédé de fabrication d'une garniture d'étanchéité gonflable vulcanisée, selon lequel on place un ou plusieurs élément(s) de garniture d'étanchéité et/ou d'obturation (4) dans une chambre creuse de la garniture d'étanchéité et on soumet les éléments de la garniture d'étanchéité à un traitement de vulcanisation
**caractérisé par le fait**
**qu'**on fabrique une ébauche de chambre creuse (2)
**qu'**on place dans l'ébauche de chambre creuse (2) le (ou les) élément(s) de garniture d'étanchéité et/ou d'obturation (4),
l'ébauche de garniture d'étanchéité étant ainsi obtenue, les éléments de l'ébauche de garniture d'étanchéité n'ayant pas encore été soumise au traitement de vulcanisation et
**qu'**on vulcanise l'ébauche de garniture d'étanchéité ainsi obtenue.

2. Procédé de fabrication d'un profilé d'étanchéité gonflable vulcanisé en forme de cordon selon la revendication 1, selon lequel on extrude un cordon profilé à chambre creuse et on ferme à l'aide bouchons (4) les extrémités du cordon profilé à chambre creuse coupé à la longueur,
**caractérisé par le fait**
**qu'**on extrude un cordon profilé à chambre creuse,
**qu'**on coupe à la longueur le cordon profilé à chambre creuse et on le ferme à l'aide de bouchons comme éléments moulés et
on vulcanise l'ébauche de profilé d'étanchéité ainsi obtenue.

3. Procédé selon la revendication 1 ou 2, **caractérisé par le fait qu'**on comprime dans des moules l'ébauche de garniture d'étanchéité à chambre creuse avec les éléments de garniture d'étanchéité et/ou d'obturation placés dans celle-ci, puis on vulcanise l'ébauche de garniture d'étanchéité.

4. Procédé selon une des revendications 1 à 3, **caractérisé par le fait qu'**on utilise comme matériau élastomère du caoutchouc Ethylène-Propylène-Diène (EPDM).

5. Procédé selon une des revendications 1 à 4, **caractérisé par le fait qu'**on utilise pour la chambre creuse et les éléments de garniture d'étanchéité et/ou d'obturation le même matériau élastomère.

6. Procédé selon une des revendications 1 à 5, **caractérisé par le fait qu'**il est prévu pour les éléments de garniture d'étanchéité et/ou d'obturation une dureté Shore moins élevée que pour la chambre creuse.

7. Procédé selon une des revendications 1 à 6, **caractérisé par le fait qu'**avant vulcanisation on enduit intérieurement de savon liquide l'ébauche de chambre creuse.

8. Procédé selon une des revendications 1 à 7, **caractérisé par le fait qu'**avant la vulcanisation on traite les éléments de garniture d'étanchéité et/ou d'obturation et/ou l'ébauche de chambre creuse avec de la cyclohexanone et/ou des solvants solubles dans le caoutchouc.

9. Garniture d'étanchéité comprenant une chambre creuse de garniture d'étanchéité et placés dans celle-ci des éléments de garniture d'étanchéité et/ou d'obturation, plus particulièrement des bouchons d'obturation (4), plus particulièrement fabriquée en appliquant le procédé selon une des revendications 1 à 8, **caractérisée par le fait que** la chambre creuse de garniture d'étanchéité (2) et les éléments de garniture d'étanchéité et/ou d'obturation (4) sont assemblés par vulcanisation à coeur.
